# EUROPEAN PATENT SPECIFICATION

(11) **EP 2 407 351 B1**
(45) Date of publication and mention of the grant of the patent: **31.10.2012**
(21) Application number: 10460032.5
(22) Date of filing: 12.07.2010
(51) Int. Cl.: B60R 11/02

(54) **A rotational holder with a ball joint mounted to a dashboard of a vehicle**
Drehhalter mit einem Kugelgelenk an einem Armaturenbrett eines Fahrzeugs montiert.
Support rotatif avec une rotule, monté sur un tableau de bord d'un véhicule.

(43) Date of publication of application: 18.01.2012
(73) Proprietor: BURY Sp. z o.o., 39-300 Mielec (PL)
(72) Inventor: Grabarz, Marian, 39-300 Mielec (PL)
(74) Representative: Kaminski, Zbigniew

(56) References cited:
- WO-A2-2006/095064
- GB-A- 2 348 076

## Description

This invention relates to a rotational holder with a ball joint, mounted to a dashboard of a motor vehicle, wherein a ball joint body is mounted to the dashboard and a holding unit of the holder is connected to a base of the ball joint body. The holder is further provided with a mechanism lowering the holding unit towards the dashboard during its turn from the vertical position to the horizontal position and opposite.

Holders for various electronic devices, especially mobile phones, mounted directly to a dashboard of a vehicle, are commonly known, however, its major inconvenience is that they may obstruct the driver's field of vision. The vehicle dashboards are sometimes provided with various cavities, which may be used to mount various holders. In other cases, the holders mounted to the dashboards are provided with various mechanisms that enable changing the holder's position in relation to the dashboard, e.g. by rotating the holder in different planes inclined towards the dashboard surface.

European patent application EP 1001546 A1 discloses a mobile phone holder connected to a hanger by means of a protruding nose, which is adapted to enter into a shaped hole in the holder and to enable its horizontal rotation.

German utility model DE 296 01 412 U1 discloses a mobile phone holder with a hanger, which is provided with a toothed roll, which enables tilting the holder in the vertical plane, and with a spur wheel, which enables holder rotation in its tilted plane.

German patent application DE 100 39 757 A1 discloses a mobile phone, especially for a car, which enables setting the phone in any plane by means of a joint. The joint is a plurality of springs connected to a base parallel to a surface of a dashboard and enabling flexible deflections to prevent the user from being wounded in case of rapid changes of a vehicle speed.

European patent EP 454 297 B1 discloses a mobile phone holder having a form of a socket connected to a vehicle body by means of a ball joint.

US patent application US 4 066 231 A discloses a holder for electronic devices that consists of a hanger mounted to a vehicle body and a flat holding unit connected with the hanger by means of a ball joint.

German patent DE 199 48 357 C2 discloses a mobile phone holder that consists of a hanger mounted to a vehicle body and connected with a holding unit by means of a ball joint. The holding unit consists of a ball joint cover and a cradle that is adapted to accommodate a mobile phone and is connected to the ball joint by means of a shaped snap joint.

German utility model DE 295 21 459 U1 discloses a phone holder, especially for cars, which consists of a hanger and a holding unit rotatably connected to the hanger by means of an inclined plate. The holding unit is mounted to the hanger by means of a screw with a half-round nut. A change of the position of the inclined plate enables a change of the angular position of the holding unit, whereas the half-round nut ensures firm connection of these two elements.

German patent application DE 41 07 997 A1 discloses a simple holder for a mobile phone that consists of a hanger fixed to a vehicle body and connected to a holding unit by means of a ball joint.

PCT patent application No. WO 2006/095064 A2 relates to a docking station for a portable equipment. The station comprises a support block for the portable equipment, a fixing element for fixing the device to a support surface, and a connecting arm between the support block and the fixing element. The station further comprises a connecting ball joint, which is disposed between the arm and the fixing element, and enables rotation of the support block with respect to the fixing element.

UK patent application No. GB 2 348 076 A describes a hang-up assembly for a radiotelephone, which comprises a cradle, a pedestal, and a ball and socket joint connecting the cradle with the pedestal. The socket of the cradle and the ball of the pedestal are connected by a screw and a dome nut, which retain the assembly in a desired position. The cradle can be repositioned relative to the pedestal by loosening, and then by tightening the screw to compress the ball and the socket joint and maintain the desired new position.

A major inconvenience of all state-of-the-art device holders for motor vehicles, mounted to a dashboard, is their height, which limits the driver's field of vision.

An object of this invention is to provide a rotational holder with a ball joint, which - in at least one of its positions - is adapted to decrease the height, at which it protrudes from a dashboard, thus extending the driver's field of vision.

According to the invention there is provided a rotational holder with a ball joint, mounted to a dashboard of a motor vehicle,which is characterized in that its lowering mechanism is provided with two toothed bars facing each other on a base of a ball joint body, and with a toothed element on a body of a holding unit, wherein the toothed bars are adapted to engage with the toothed element.

In a preferred embodiment of the holder, the toothed element surrounds coaxially an axis of a hole located in the centre of symmetry of the body of the holding unit.

Preferably, the ball joint body consists of the base, which is adapted to contact a lower portion of the body of the holding unit, and of a casing, connected to the base and provided with a cover, with which it is connected by means of a screw in a spring.

Advantageously, the lower portion of the body of the holding unit is provided with a plurality of arcuate grooves that are adapted to control the vertical movement of the holding unit, whereas the base of the ball joint body is provided with pins, which are adapted to engage with the arcuate grooves.

Further, the base of the ball joint body is provided with a hole, which is adapted to accommodate a flanged sleeve that connects the base with the lower portion of the body of the holding unit by means of screws.

Advantageously, the lower portion of the body of the holding unit is provided with a plurality of flexibly mounted small bolts with springs, that are adapted to lock the holding unit in its extreme vertical or horizontal position. The plurality of small bolts is preferably enclosed by a pressure plate that is a support for the springs.

Performance tests of the holder according to the invention proved, that in its normal horizontal position, at which e.g. looking of the GPS navigation display is done, it is located in the least-protruding position above the line of the dashboard. When a number is dialed, the holder is turned into its vertical position, which is its uppermost position above the dashboard, and the attention of the driver is then paid to the phone display.

Thanks to it, the holder according to the invention does not obstruct the driver's field of vision, comparing to other known holders.

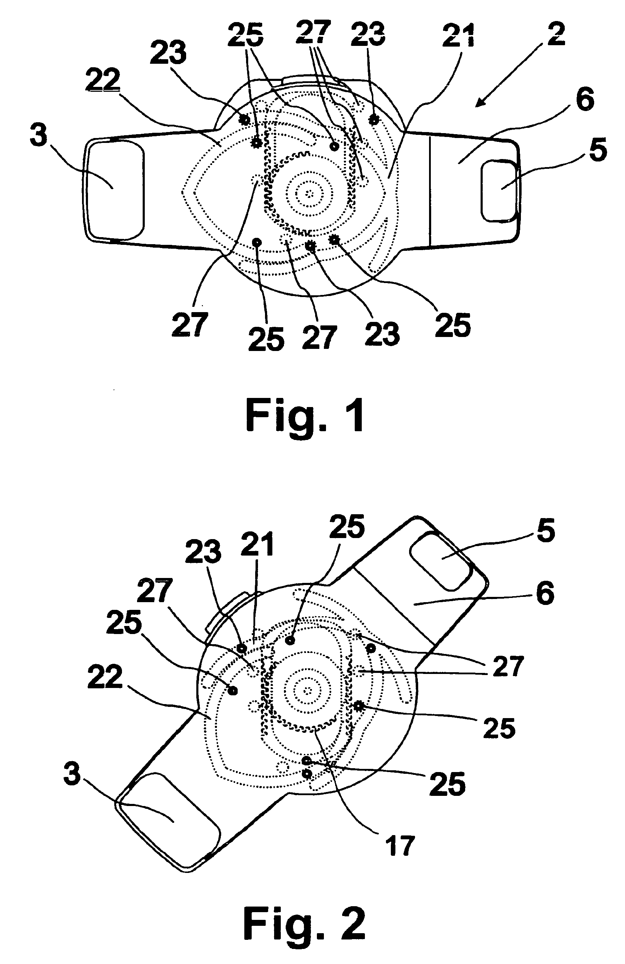

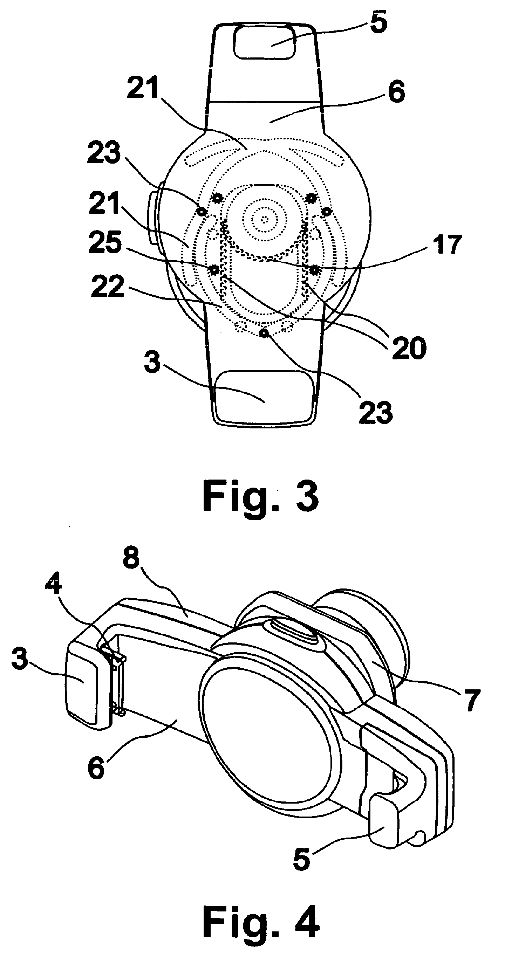

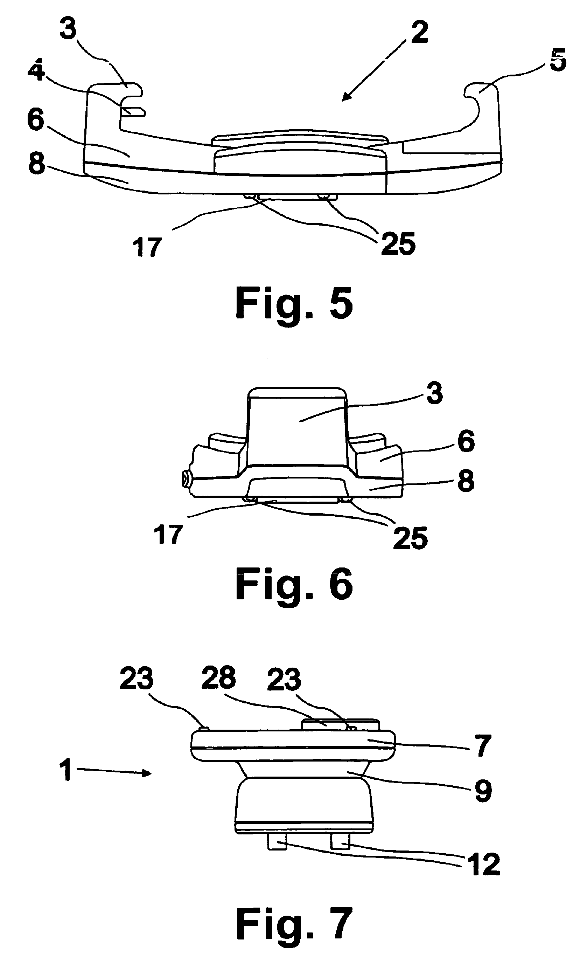

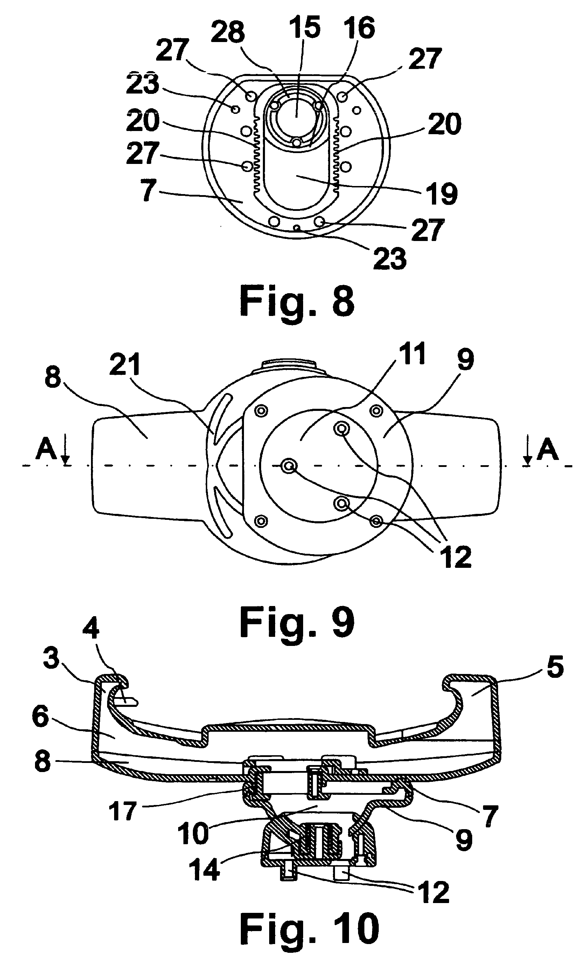

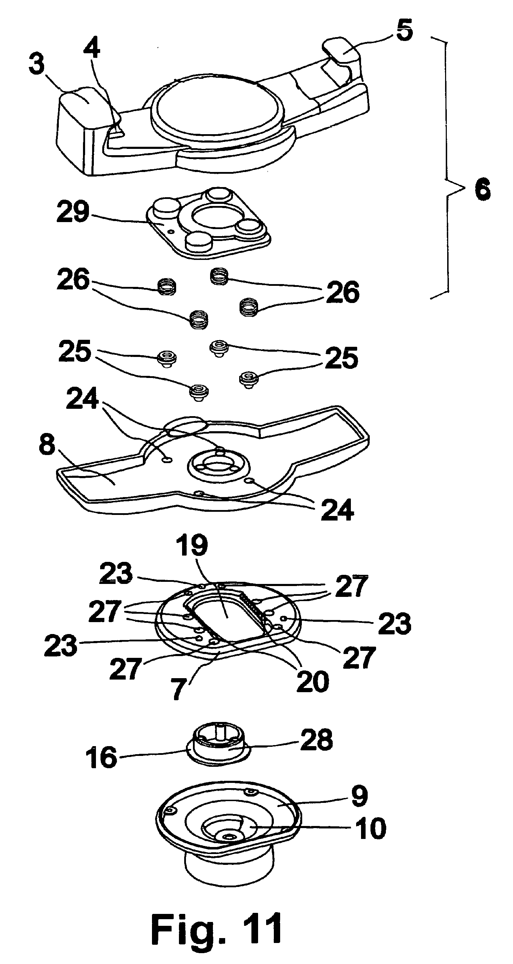

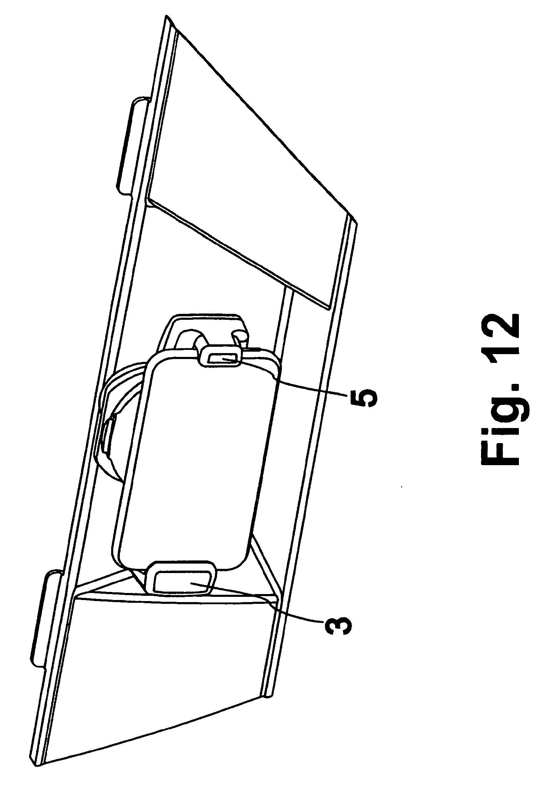

A holder according to the invention is depicted in the drawings, where: Fig. 1 - shows relative positions of a holder base and a base and casing of a ball joint in a holder's horizontal position, Fig. 2 - shows relative positions of the holder base and the base and casing of the ball joint in a holder's intermediate position, Fig. 3 - shows relative positions of the holder base and the base and casing of the ball joint in a holder's vertical position, Fig. 4 - is a perspective view of one of the embodiments of the holder connected with the ball joint, Fig. 5 - is a side view of the holder without the ball joint, according to Fig. 4, Fig. 6 - is a top view of the same holder without the ball joint, Fig. 7 - is a side view of a ball joint body, Fig. 8 - is the ball joint body, as per Fig. 7, viewed at the base, Fig. 9 - is a rear view of the holder with the ball joint, Fig. 10 - is a cross-section view of the same holder with the ball joint taken along the A-A line of Fig. 9, Fig. 11 - is an explode view of the holder with the ball joint, and Fig. 12 - is the holder with the ball joint and a mobile phone resting in it, mounted in a cavity of a vehicle dashboard.

A rotational holder with a ball joint, mounted to a dashboard of a motor vehicle, provided with a lowering mechanism, as depicted in Figs. 1-4, consists of two basic components: a ball joint (1), which casing forms a hanger fixed to the vehicle dashboard, and a holding unit (2), which is adapted to accommodate a mobile phone, not depicted in the drawings, or another electronic apparatus that may be useful in a car. In one of its embodiments the known holder is provided with two jaws: a fixed jaw (3) with a contact element (4) and a movable jaw (5), mounted slideably in an oblong body (6) of the holding unit (2). Inside the body (6) of the holding unit (2) there is a known moving and locking mechanism.

A body of the ball joint (1), as depicted in Figs. 7-8 and 10, consists of a base (7) connected to a lower portion (8) of the holder body, and of a casing (9) forming a shield for a ball (10) of the ball joint (1). The casing (9) is favourably provided with a cover (11) with bolts (12), which are used to place and locate the holder on the dashboard, not depicted in the drawings. The cover (11) is connected with the casing (9) by means of a screw in a spring (14). Shapes of a lower surface of the lower portion (8) of the body (6) of the holding unit (2) and the base (7) of the ball joint (1) shall be adapted to ensure a relative motion of both parts triggered by a rotational motion of the body (6) and its concurrent vertical motion. For this purpose, in the lowering mechanism the external surface of the lower portion (8) of the body (6) of the holding unit (2) (located under the body in Figs. 5 and 6) is provided with a symmetrical central hole (15) with a flange (16) surrounded by a toothed element (17) (Figs. 2 10, 11). At the same time, an external surface of the ball joint (1) base (7) is provided with an oblong hole (19), on the edge of which there are two parallel tooth bars (20) that are adapted to engage alternatingly with the toothed element (17) (Figs. 2 and 10). Moreover, the external surface of the lower portion (8) of the body (6) of the holding unit (2) is provided with internal arcuate grooves (21) and external arcuate grooves (22), whereas the external surface of the base (7) of the ball joint (1) body is provided with three pins (23) arranged symmetrically. The pins (23) are adapted to engage with the arcuate grooves thus controlling the movement of the body (6) of the holding unit (2) so that it is lifted above the dashboard while being rotated around the axis of the central hole (15). The lower portion (8) of the body (6) of the holding unit (2) is additionally provided with a plurality of holes (24), in which small bolts (25) are flexibly mounted on an internal part of that portion (8). The small bolts (25) are supported by a pressure plate (29), which is adapted to provide a support for springs (26). The small bolts (25) are adapted to engage with holes (27) of the base (7) thus locking the holding unit (2) in its extreme horizontal or vertical position set.

To connect the lower portion (8) of the body (6) of the holding unit (2) with the base (7) of the ball joint (1) body a sleeve (28), connected with the lower portion (8) of the body (6) by means of screws, is used.

An operation of the presented embodiment of the rotational holder with the ball joint is as follows:

The assembled holder, as depicted in Fig. 10, is mounted to the dashboard by means of bolts (12) so that the holding unit (2) is in the horizontal position. In this position the holder is in the least distance to the dashboard and does not limit the driver's field of vision (Fig. 1). In order to facilitate an operation of a phone keyboard or display, it is favourable to turn the holder into the vertical position. During the turn of the holder from the Fig. 1 position, via the Fig. 2 position to the Fig. 3 position, the holding unit (2) is concurrently moved vertically upwards. This complex movement is a result of the rotational motion of the holding unit (2), done manually, and its concurrent upward movement caused by an engagement of the rotating toothed element (17) and one of the toothed bars (20). The upward movement is also controlled by three pins (23), guided in the internal (21) and external arcuate grooves (22) of the lower portion (8) of the body (6). The holder may be returned to its horizontal position by means of both a further movement of the holding unit (2) or by its opposite movement. In both cases, the rotational movement of the holding unit (2) is accompanied by the vertical movement of the holding unit (2) towards the dashboard.

## Claims

1. A rotational holder with a ball joint, mounted to a dashboard of a motor vehicle, wherein a ball joint (**1**) body is mounted to the dashboard and a holding unit (**2**) of the holder is connected to a base (**7**) of the ball joint (**1**) body, the holder is further provided with a mechanism lowering the holding unit (**2**) towards the dashboard during its turn from the vertical position to the horizontal position and opposite, **characterized in that** the lowering mechanism is provided with two toothed bars (**20**) facing each other on the base (**7**) of the ball joint (**1**) body, and with a toothed element (**17**) on a body (**6**) of the holding unit (**2**), wherein the toothed bars (**20**) are adapted to engage with the toothed element (**17**).

2. The holder according to Claim 1, **characterized in that** the toothed element (**17**) surrounds coaxially an axis of a hole (**15**) located in the centre of symmetry of the body (**6**) of the holding unit (**2**).

3. The holder according to Claim 1, **characterized in that** the ball joint (**1**) body consists of the base (**7**), which is adapted to contact a lower portion (**8**) of the body (**6**) of the holding unit (**2**), and of a casing (**9**), connected to the base (**7**) and provided with a cover (**11**), with which it is connected by means of a screw in a spring (**14**).

4. The holder according to Claim 3, **characterized in that** the lower portion (**8**) of the body (**6**) of the holding unit (**2**) is provided with a plurality of arcuate grooves (**21**, **22**) that are adapted to control the vertical movement of the holding unit (**2**), whereas the base (**7**) of the ball joint (**1**) body is provided with pins (**23**), which are adapted to engage with the arcuate grooves (**21**, **22**).

5. The holder according to Claim 3 or 4, **characterized in that** the base (**7**) of the ball joint (**1**) body is provided with a hole (**19**), which is adapted to accommodate a flanged sleeve (**28**) that connects the base (7) with the lower portion (**8**) of the body (**6**) of the holding unit (**2**) by means of screws.

6. The holder according to Claim 3 or 4, **characterized in that** the lower portion (**8**) of the body (**6**) of the holding unit (**2**) is provided with a plurality of flexibly mounted small bolts (**25**) with springs (**26**), that are adapted to lock the holding unit (**2**) in its extreme vertical or horizontal position.

7. The holder according to Claim 6, **characterized in that** the plurality of small bolts (**25**) is enclosed by a pressure plate (**29**) that is a support for the springs (**26**).

## Patentansprüche

1. Drehhalterung mit Kugelgelenk zur Montage am Fahrzeugarmaturenbrett, in welcher der Kugelgelenkkörper (**1**) am Armaturenbrett befestigt und die eigentliche Halterung (**2**) der Drehhalterung mit dem Grundkörper (**7**) des Kugelgelenks (**1**) verbunden ist, wobei die Drehhalterung auch mit einem Mechanismus zum Senken der eigentlichen Halterung (**2**) in Richtung des Armaturenbretts bei Drehung von der vertikalen zur horizontalen Position und umgekehrt ausgerüstet ist, **gekennzeichnet dadurch, dass** der Senkmechanismus über zwei gegenüberliegende Zahnstangen (20) am Grundkörper (7) des Kugelgelenkkörpers (**1**) sowie eine Zahnstange (**17**) am Körper (**6**) der eigentlichen Halterung (**2**) verfügt, wobei die gegenüberliegenden Zahnleisten (**20**) zusammen mit der Zahnleiste (**17**) funktionieren können.

2. Halterung nach Anspruch 1, **gekennzeichnet dadurch, dass** die Zahnleiste (**17**) mittig um die Achse des im Symmetriezentrum des Körpers (**6**) der eigentlichen Halterung (**2**) befindlichen Lochs (**15**) gelagert ist.

3. Halterung nach Anspruch 1 **gekennzeichnet dadurch, dass** der Kugelgelenkkörper (**1**) aus einem Grundkörper (**7**) besteht, der zum Kontakt mit dem unteren Teil (**8**) des Körpers (**6**) der eigentlichen Halterung (**2**) vorgesehen ist, und einem mit dem Grundkörper (**7**) verbundenen Gehäuse (**9**), das über einen Deckel (**11**) verfügt und mittels einer in einer Feder befindlichen Schraube (**14**) damit verbunden ist.

4. Halterung nach Anspruch 3, **gekennzeichnet dadurch, dass** der untere Teil (**8**) des Körpers (**6**) der eigentlichen Halterung (**2**) über ein Nockenrillensystem (**21, 22**) verfügt; diese Nockenrillen steuern die Vertikalbewegung der eigentlichen Halterung (**2**) und der Grundkörper (7) des Kugelgelenkkörpers (**1**) verfügt über Stifte (**23**), die zur Arbeit mit der Nockenrillen (**21, 22**) vorgesehen sind.

5. Halterung nach Anspruch 3 oder 4, **gekennzeichnet dadurch, dass** der Grundkörper (**7**) des Kugelgelenkkörpers (**1**) über ein Noch (**19**) verfügt, das zum Durchstecken einer Flanschbuchse (**28**) zur Verbindung des Grundkörpers (**7**) mittels Schrauben mit dem unteren Teil (**8**) der Körpers (**6**) der eigentlichen Halterung (**2**) vorgesehen ist.

6. Halterung nach Anspruch 3 oder 4, **gekennzeichnet dadurch, dass** der untere Teil (**8**) des Körpers (**6**) der eigentlichen Halterung (**2**) über elastisch gelagerte Pilzelemente (**25**) mit Federn (**26**) verfügt, welche zur Verriegelung der eigentlichen Halterung (**2**) in der eingestellten Horizontal- oder Vertikalendstellung vorgesehen sind.

7. Halterung nach Anspruch 6, **gekennzeichnet dadurch, dass** das Verriegelungspilzsystem (**25**) durch eine Druckplatte (**29**) geschlossen ist, welche eine Stützfläche für die Federn (**26**) darstellt.

## Revendications

1. La poignée tournante avec une rotule fixée au tableau de bord d'un véhicule mécanique ou le corps de la rotule (1) est fixé au tableau de bord, par contre la poignée principale (2) de la poignée tournante est fixée à la base (7) du corps de la rotule (1), sachant que la poignée tournante soit en plus équipée d'un mécanisme abaissant la poignée principale (2) en bas, vers le tableau de bord, durant la rotation, d'une position verticale jusqu'à la position horizontale et à l'envers, **caractérisé en ce que** le mécanisme abaissant est équipé de deux crémaillères opposées (20) à la base (7) du corps de la rotule (1) et d'une crémaillère (17) sur le corps (6) de la poignée principale (2), sachant que les crémaillères opposées (20) sont adaptées à la coopération avec la crémaillère (17).

2. La poignée selon la revendication 1, **caractérisé en ce que** la crémaillère (17) entoure, d'une manière concentrique, un axe de l'orifice (15) se trouvant au milieu de la symétrie du corps (6) de la poignée principale (2).

3. La poignée selon la revendication 1, **caractérisé en ce que** le corps de la rotule (1) est composé de la base (7) qui est adaptée au contact avec la partie inférieure (8) du corps (6) de la poignée principale (2) et du boîtier (9) fixé à la base (7) et équipé d'un couvercle (11), y fixé avec un vis dans un ressort (14).

4. La poignée selon la revendication 3, **caractérisé en ce que** la partie inférieure (8) du corps (6) de la poignée principale (2) est équipée d'une came à rainures (21, 22) adaptées à la commande du mouvement vertical de la poignée principale (2), tandis que la base (7) du corps de la rotule (1) est équipée des goujons (23) qui sont adaptés à la coopération avec des rainures de la came (21, 22).

5. La poignée selon la revendication 3 ou 4, **caractérisé en ce que** la base (7) du corps de la rotule (1) est équipée d'un orifice (19) qui est adapté au passage de la douille à brides (28) reliant avec des vis la base (7) et la partie inférieure (8) du corps (6) de la poignée principale (2).

6. La poignée selon la revendication 3 ou 4, **caractérisé en ce que** la partie inférieure (8) du corps (6) de la poignée principale (2) d'un système des bouchons « champignons » (25) fixés d'une manière souple avec des ressorts (26) qui sont adaptés à bloquer la poignée principale (2) dans sa position extrême verticale ou horizontale.

7. La poignée selon la revendication 6, **caractérisé en ce que** le système des « champignons » bloquant (25) est fermé par un plateau de pression (29) qui constitue un appui pour les ressorts (26).
